# EUROPEAN PATENT APPLICATION

(11) **EP 4 614 689 A1**
(43) Date of publication of application: **10.09.2025**
(21) Application number: 23907453.7
(22) Date of filing: 22.11.2023
(51) Int. Cl.: H01M 50/145, H01M 50/195, H01M 50/197, H01M 50/178, H01M 50/105, B32B 27/08, B32B 27/32

(54) **POUCH-TYPE SECONDARY BATTERY**

(30) Priority: 19.12.2022 KR 20220178737
(71) Applicant: LG Energy Solution, Ltd., Seoul 07335 (KR)
(72) Inventor: PARK, Eun Suk, Daejeon 34122 (KR); KIM, Sang Hun, Daejeon 34122 (KR); LEE, Jae Ho, Daejeon 34122 (KR); LEE, Yu Jin, Daejeon 34122 (KR)
(74) Representative: Plasseraud IP
(86) International application number: PCT/KR2023/018918
(87) International publication number: WO 2024/136167

(57) **Abstract**

A pouch type secondary battery according to the present invention includes an electrode assembly, a pouch type case including an accommodation portion for accommodating the electrode assembly and a sealing portion for sealing the accommodating portion, an electrode lead connected to the electrode assembly and protruding to the outside of the pouch type case via the sealing portion, and a lead film disposed between the electrode lead and the pouch type case, wherein the lead film has a multilayer structure and includes a filler layer containing a polypropylene homopolymer and a ceramic filler, and the ceramic filler is contained in an amount of 1 wt% to 14 wt% with respect to a total weight of the lead film.

## Description

### TECHNICAL FIELD

### Cross-reference to Related Applications

The present application claims the benefit of the priority of Korean Patent Application No. 10-2022-0178737, filed on 12/19/2022, which is hereby incorporated by reference in its entirety.

### Technical Field

The present invention relates to a pouch type secondary battery, and more particularly, to a pouch type secondary battery including a lead film.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices. The secondary batteries include nickel-cadmium batteries, nickel-hydrogen batteries, lithium ion batteries, and lithium ion polymer batteries.

The secondary batteries may be manufactured by accommodating an electrode assembly, in which a positive electrode, a negative electrode, and a separator sandwiched therebetween are alternately stacked, in a battery case, injecting an electrolyte, and then sealing the battery case. The secondary batteries are classified into pouch type secondary batteries and can type secondary batteries according to a material of a case accommodating an electrode assembly. In particular, the pouch type batteries may be manufactured by performing press processing on a flexible pouch film laminate to form a cup portion, and then accommodating an electrode assembly in a receiving space inside the cup portion and sealing a sealing portion.

Meanwhile, the pouch type secondary batteries may generate gas inside a pouch when operated at high temperatures, overcharged, or brought with a short circuit. When gas pressure inside the pouch increases, the sealing portion of the pouch is corroded and vented due to the gas, causing explosion or ignition. In particular, to obtain the durability of pouch type secondary batteries, there is a need for technology that may improve the corrosion resistance and sealing strength of a connection portion between an electrode lead and a pouch type film laminate, which are of different kinds of materials, in the sealing portion.

### DISCLOSURE OF THE INVENTION

### TECHNICAL PROBLEM

An aspect of the present invention provides a pouch type secondary battery capable of preventing a connection portion between an electrode lead and a pouch type film laminate from corroding and preventing an interface of the connection portion from being separated due to gas generation inside a pouch.

### TECHNICAL SOLUTION

According to an aspect of the present invention, provided is a pouch type secondary battery including an electrode assembly, a pouch type case including an accommodation portion for accommodating the electrode assembly and a sealing portion for sealing the accommodating portion, an electrode lead connected to the electrode assembly and protruding to the outside of the pouch type case via the sealing portion, and a lead film disposed between the electrode lead and the pouch type case, wherein the lead film has a multilayer structure and includes a filler layer containing a polypropylene homopolymer and a ceramic filler, and the ceramic filler is contained in an amount of 1 wt% to 14 wt% with respect to a total weight of the lead film.

The ceramic filler according to the present invention may include at least one selected from the group consisting of CaCO₃, Ca(OH)₂, CaCl₂, CaO, KOH, NaOH, and Na₂CO.

The lead film according to the present invention may include a lead adhesive layer disposed on the electrode lead, a filler layer disposed on the lead adhesive layer, and a case adhesive layer disposed on the filler layer.

The lead adhesive layer may include acid modified polyolefin. In addition, the lead adhesive layer may have a thickness of 45 µm to 80 µm.

The ceramic filler may be contained in an amount of 3 wt% to 10 wt% with respect to a total weight of the lead film. In addition, the base layer may have a thickness of 45 µm to 80 µm.

The case adhesive layer may include polypropylene, and the polypropylene may be a copolymer. In addition, the case adhesive layer may have a thickness of 55 µm to 85 µm.

The lead film may have a thickness of 150 µm to 250 µm. In addition, one side of the electrode lead, which is in direct contact with the lead film, may be coated with at least one selected from the group consisting of chromium (Cr), nickel (Ni), aluminum oxide (Al₂O₃), zirconium (Zr), and titanium (Ti).

The ceramic filler may have an average particle diameter D₅₀ of 1 µm to 20 µm.

### ADVANTAGEOUS EFFECTS

The present invention involves adsorbing gas generated inside a pouch through a ceramic filler having a specific average particle diameter and amount range in a lead film disposed at a connection portion between an electrode lead and a pouch type film laminate. Accordingly, the connection portion between the electrode lead and the pouch type film laminate is prevented from being corroded due to gas, thereby achieving high sealing strength and improving the safety of a pouch secondary battery.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings.
FIG. 1 is an exploded view of a pouch type secondary battery according to the present invention;
FIG. 2 is a cross-sectional view of a sealed pouch type secondary battery; and
FIG. 3 is a cross-sectional view of a lead film according to an embodiment of the present invention.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising"as used herein does not exclude the presence or addition of one or more other components besides a mentioned component.

Herein, when an element "includes" a component, it may indicate that the element does not exclude another component unless explicitly described to the contrary, but may further include another component.

Herein, the description "A and/or B" refers to A or B, or A and B.

Herein, "%" refers to wt% unless indicated otherwise.

The term "D₅₀" as used herein may be defined as a particle diameter at a cumulative volume of 50% in a particle size distribution curve of particles. The D₅₀ may be measured, for example, by using a laser diffraction method. The laser diffraction method generally allows the measurement of a particle diameter ranging from a submicron level to a few mm and may produce highly repeatable and high-resolution results.

As used herein, a "specific surface area" is measured through a BET method, and specifically may be calculated from an amount of nitrogen gas adsorbed at a liquid nitrogen temperature (77K) using BELSORP-mino II from BEL JAPAN or Micromertics ASAP 2020 from Microtrac.

A pouch type secondary battery according to the present invention includes an electrode assembly, a pouch type case comprising an accommodation portion for accommodating the electrode assembly and a sealing portion for sealing the accommodating portion, an electrode lead connected to the electrode assembly and protruding to the outside of the pouch type case via the sealing portion, and a lead film disposed between the electrode lead and the pouch type case, wherein the lead film has a multilayer structure and includes a base layer containing a polypropylene homopolymer, and the base layer includes a ceramic filler in an amount of 1 wt% to 14 wt% with respect to a total weight of the base layer.

Hereinafter, respective components of the pouch type secondary battery of the present invention will be described in more detail with reference to the drawings.

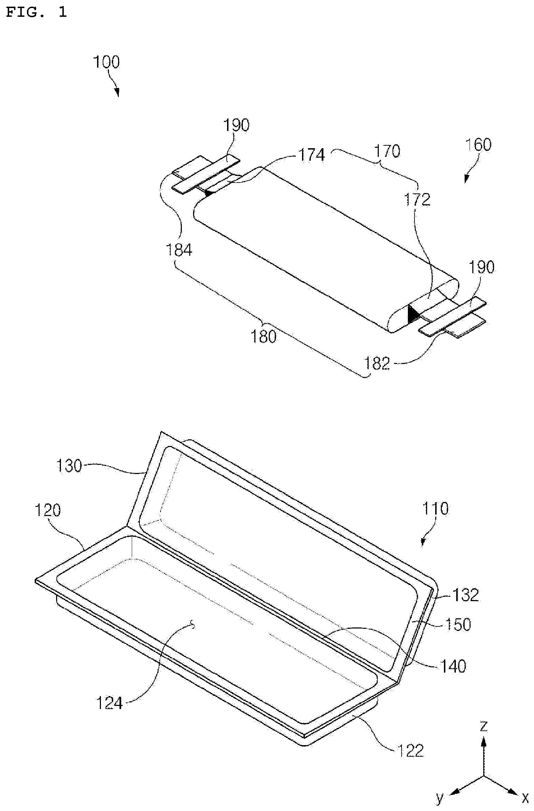

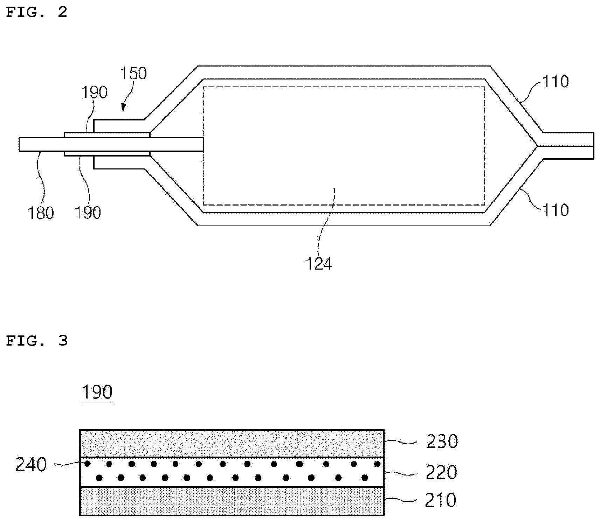

FIG. 1 is an exploded view of a pouch type secondary battery 100 according to the present invention, and FIG. 2 is a cross-sectional view of a sealed pouch type secondary battery 100. In FIG. 2, some components of the pouch type secondary battery 100 are not provided for convenience of understanding. As shown in FIGS. 1 and 2, the pouch type secondary battery 100 of the present invention includes a pouch type case 110, an electrode assembly 160, an electrode lead 180, and a lead film 190.

### (1) Pouch type case

The pouch type case 110 may store the electrode assembly 160 inside. The pouch type case 110 may be manufactured by molding a pouch film laminate. In this case, the pouch film laminate may include a base layer, a gas barrier layer, and a sealant layer. In the pouch film laminate, the base layer, the gas barrier layer, and the sealant layer may be sequentially stacked.

The base layer is formed on an outermost layer of the pouch film laminate to protect the secondary battery against external friction and collision. The base layer is made of a polymer and may thus electrically insulate the electrode assembly from the outside.

The base layer may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the base layer may be made of polyethylene terephthalate (PET), nylon, or a combination thereof, which has abrasion resistance and heat resistance.

The base layer may have a single film structure made of any one material. Alternatively, the base layer may have a composite film structure in which two or more materials are respectively formed as layers.

The base layer may have a thickness of 5 µm to 50 µm, specifically 7 µm to 40 µm, more specifically 25 µm to 38 µm. When the thickness of the base layer satisfies the above range, external insulation is excellent, and the entire pouch is not thick, and accordingly, energy density to volume of the secondary battery may be excellent.

The gas barrier layer is stacked between the base layer and the sealant layer to secure mechanical strength of the pouch, block the entry and exit of gases or moisture outside the secondary battery, and prevent electrolyte leakage from the inside of the pouch type case.

The gas barrier layer may be formed of metal, and may specifically be formed of an aluminum alloy thin film. When forming a gas barrier layer using an aluminum alloy thin film, gas barrier layer may have a predetermined level of mechanical strength and also be light in weight, and may complement electrochemical properties caused by the electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer may have a thickness of 40 µm to 100 µm, specifically 50 µm to 90 µm, more specifically 55 µm to 85 µm. When the thickness of the gas barrier layer satisfies the above range, moldability and gas barrier performance are excellent when molding a cup portion.

The sealant layer is thermally bonded together at a sealing portion when the pouch type case accommodating the electrode assembly inside is sealed to completely seal the inside of the pouch type case. To this end, the sealant layer may be formed of a material having excellent heat sealingstrength.

The sealant layer may be formed of a material having insulation, corrosion resistance, and sealing properties. Specifically, the sealant layer is in direct contact with the electrode assembly and/or electrolyte inside the pouch type case, and may thus be formed of a material having insulation and corrosion resistance. In addition, the sealant layer is supposed to completely seal the inside of the pouch type case and block material movement between inside and outside, and may thus be formed of a material having high sealing properties (e.g., excellent heat sealing strength). To make sure that such insulation, corrosion resistance, and sealing properties are obtained, the sealant layer may be formed of a polymer material. For example, the sealant layer may include polypropylene, but is not limited thereto.

The pouch film laminate may be drawn, molded, or stretched by a punch or the like to manufacture the pouch type case 110. Accordingly, the pouch type case 110 may include a cup portion 122 and an accommodation portion 124. The accommodation portion 124 is a place to store the electrode assembly, and may indicate a receiving space formed in the shape of a pocket inside the cup portion 122 as the cup portion 122 is formed.

According to an embodiment of the present invention, the pouch type case 110 may include a first case 120 and a second case 130 as shown in FIG. 1. The first case 120 may include an accommodation portion 124 capable of accommodating the electrode assembly 160, and the second case 130 may cover the accommodation portion 124 from above to prevent the electrode assembly 160 from being separated to the outside of the battery case 110. The first case 120 and the second case 130 may be manufactured in a way that one side of the first case 120 and one side of the second case 130 may be connected to each other as shown in FIG. 1, but the embodiment of the present invention is not limited thereto, and the first case 120 and the second case 130 may be diversely manufactured, for example, individually manufactured by being separated from each other.

According to another embodiment of the present invention, when forming a cup portion in a pouch film laminate, two symmetrical cup portions 122 and 132 may be drawn and molded adjacent to each other in one pouch film laminate. In this case, the cup portions 122 and 132 may be formed in the first case 120 and the second case 130, respectively, as shown in FIG. 1. After accommodating the electrode assembly 160 in the accommodation portion 124 provided in the cup portion 122 of the first case 120, a bridge portion 140 formed between the two cup portions 122 and 132 may be folded such that the two cup portions 122 and 132 face each other. In this case, the cup portion 132 of the second case 130 may accommodate the electrode assembly 160 from above. Accordingly, the two cup portions 122 and 132 accommodate one electrode assembly 160, and thus an electrode assembly 160 that is thicker than when there is only one cup portion 122 may be accommodated. In addition, one edge of the secondary battery 100 is formed by folding the pouch type case 110, and accordingly, the number of edges to be sealed may be reduced when a sealing process is performed later. Accordingly, process speed of the pouch type secondary battery 100 may be improved and the number of sealing processes may be reduced.

The pouch type case 110 may be sealed while accommodating the electrode assembly 160 so that a portion of an electrode lead 180, which will be described later, i.e., a terminal portion, is exposed. Specifically, when the electrode lead 180 is connected to an electrode tab 170 of the electrode assembly 160 and a lead film 190 is formed on a portion of the electrode lead 180, the electrode assembly 160 may be accommodated in the accommodation portion 124 provided in the cup portion 122 of the first case 120, and the second case 130 may cover the accommodation portion 124 from above. Then, an electrolyte is injected into the accommodation portion 124 and the sealing portion 150 formed on an edge of the first case 120 and the second case 130 may be sealed.

The sealing portion 150 may serve to seal the accommodation portion 124. Specifically, the sealing portion 150 may be formed along an edge of the accommodation portion 124 and may thus seal the accommodation portion 124.

The temperature at which the sealing portion 150 is sealed may be 180 °C to 250 °C, specifically 200 °C to 250 °C, more specifically 210 °C to 240 °C. When the sealing temperature satisfies the above numerical range, the pouch type case 110 may obtain sufficient sealing strength through heat sealing.

### (2) Electrode assembly

The electrode assembly 160 may be inserted into the pouch type case 110 and sealed through the pouch type case 110 after electrolyte injection.

A positive electrode, a separator, and a negative electrode may be sequentially stacked to form the electrode assembly 160. Specifically, the electrode assembly 160 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 160 may be manufactured into a predetermined shape. Types of the electrode assembly 160 may include a stack type, a jelly roll type, and a stack and folding type, but are not limited thereto.

The electrode assembly 160 may include an electrode tab 170.

The electrode tab 170 is connected to each of the positive electrode and the negative electrode of the electrode assembly 160, and protrudes outward from the electrode assembly 160, and may thus serve as a path through which electrons move between the inside and the outside of the electrode tab. A current collector included in the electrode assembly 160 may be provided with a portion to which an electrode active material is applied, and an end portion to which an electrode active material is not applied, that is, a non-coating portion. The electrode tab 170 may be formed by cutting the non-coating portion or formed by connecting a separate conductive member to the non-coating portion through ultrasonic welding or the like. As shown in FIG. 1, the electrode tab 170 may protrude in different directions from the electrode assembly 160, but is not limited thereto, and may be formed to protrude in various directions, such as protruding from one side in the same direction.

### (3) Electrode lead

The electrode lead 180 may supply electricity to the outside of the secondary battery 100. The electrode lead 180 may be connected to the electrode tab 170 of the electrode assembly 160 through spot welding, or the like.

The electrode lead 180 may be connected to the electrode assembly 160 and may protrude to the outside of the pouch type case 110 via the sealing portion 150. Specifically, one end of the electrode lead 180 may be connected to the electrode assembly 160, particularly to the electrode tab 170, and the other end of the electrode lead 180 may protrude to the outside of the pouch type case 110.

The electrode lead 180 may include a positive electrode lead 182 with one end connected to the positive electrode tab 172 and extending in a direction in which the positive electrode tab 172 protrudes, and a negative electrode lead 184 with one end connected to the negative electrode tab 174 and extending in a direction in which the negative electrode tab 174 protrudes. The other ends of both the positive lead 182 and the negative lead 184 may protrude to the outside of the battery case 110. Accordingly, electricity generated inside the electrode assembly 160 may be supplied to the outside. In addition, the positive electrode tab 172 and the negative electrode tab 174 are each formed to protrude in various directions, and accordingly, the positive electrode lead 182 and the negative electrode lead 184 may also extend in various directions. The positive electrode lead 182 and the negative electrode lead 184 may be made of materials different from each other. That is, the positive electrode lead 182 may be made of the same aluminum (Al) material as a positive electrode current collector, and the negative electrode lead 184 may be made of the same copper (Cu) or nickel (Ni)-coated copper material as a negative electrode current collector. A portion of the electrode lead 180 protruding to the outside of the battery case 110 may serve as a terminal portion and be electrically connected to an external terminal.

One side of the electrode lead 180, which is in direct contact with the lead film 190, may be coated with at least one selected from the group consisting of chromium (Cr), nickel (Ni), aluminum oxide (Al₂O₃), zirconium (Zr), and titanium (Ti). In this case, corrosion resistance against an electrolyte solution and adhesion to the lead film 190 may be obtained.

### (4) Lead film

The lead film 190 serves to prevent electricity generated from the electrode assembly 160 from flowing to the battery case 110 through the electrode lead 180.

The lead film 190 may be disposed to surround an outer circumferential surface of the electrode lead 180. Specifically, at least a portion of the electrode lead 180 may be surrounded by the lead film 190. The lead film 190 may be placed to be limited within the sealing portion 150 in which the first case 120 and the second case 130 of the pouch type case 110 are thermally fused.

The lead film 190 may be disposed between the electrode lead 180 and the pouch type case 110. For example, as shown in FIG. 2, a lower case 110, a lead film 190, an electrode lead 180, a lead film 190, and an upper case 110 may be stacked and disposed in this order in the sealing portion 150. In this case, the lead film 190 may be in direct contact with a sealant layer of the battery case 110.

The lead film 190 may be formed of a non-conductor having non-conductive properties in which electricity does not flow well. In general, as the lead film 190, relatively thin insulation tape easily attached to the electrode lead 180 and/or a pouch film laminate is widely used, but the embodiment of the present invention is not limited thereto, and thus any member capable of insulating the electrode lead 180 may be used. Preferably, the lead film 190 may be a polypropylene extrusion film instead of a composite cross-linked film, and the polypropylene extrusion film is easier to control flowability by temperature than the cross-linked film and fill fine gaps upon heat fusion, and thus is preferred.

The lead film 190 may have a thickness of 150 µm to 250 µm, specifically 170 µm to 230 µm, more specifically 190 µm to 210 µm. When the thickness of the lead film 190 satisfies the above numerical range, the tensile properties of the lead film may be increased to obtain pouch durability and also degradation in cell energy density is preventable.

Meanwhile, the lead film 190 according to the present invention has a multilayer structure and includes a filler layer 220, and in this case, the filler layer 220 includes a polypropylene homopolymer and a ceramic filler. In this case, the ceramic filler may be included in an amount of 1 wt% to 14 wt%, specifically 2 wt% to 12 wt%, more specifically 3 wt% to 10 wt% with respect to a total weight of the lead film. When the amount of ceramic filler is less than 1 wt% with respect to a total weight of the lead film 190, the ceramic filler included in the lead film fails to sufficiently adsorb gas inside the pouch. When the amount of ceramic filler is greater than 14 wt% with respect to a total weight of the lead film 190, separation between layers may take place due to insufficient mixing between respective layers included in the lead film 190 upon heat fusion.

In addition, the ceramic filler may preferably have an average particle diameter D₅₀ of 1 µm to 20 µm, specifically 1 µm to 10 µm, more specifically 1 µm to 6 µm. When a ceramic filler having an average particle diameter in the above range is included in the filler layer 220 in the lead film 190, it is beneficial in that extrusion processability of a resin for manufacturing the lead film 190 may be improved, interlayer separation of a multilayer structure within the lead film 190 may be effectively prevented, and excellent sealing strength may be maintained.

The ceramic filler may include at least one selected from the group consisting of CaCO₃, Ca(OH)₂, CaCl₂, CaO, KOH, NaOH, and Na₂CO. Preferably, the ceramic filler may include at least one of CaCO₃ and Ca(OH)₂, which are affordable and easily adsorb gases such as hydrofluoric acid (HF).

In addition, the lead film may further include additives other than the ceramic filler described above. The inclusion of additives in the lead film 190 may change the physical properties of the lead film 190. For example, as an additive to control the tensile strength of the lead film 190, at least any one of carbon fiber, glass fiber, and aramid fiber may be further added.

Meanwhile, FIG. 3 is a cross-sectional view of the lead film 190 according to an embodiment of the present invention. As shown in FIG. 3, the lead film 190 may include a lead adhesive layer 210, a filler layer 220, and a case adhesive layer 230, which are sequentially stacked. Specifically, the lead adhesive layer 210 may be disposed on the electrode lead 180 when assembling the pouch, the filler layer 220 may be disposed on the lead adhesive layer 210, and the case adhesive layer 230 may be disposed on the filler layer 220. In this case, the filler layer 220 may include the ceramic filler 240 described above. When the ceramic filler 240 of the present invention is included in the filler layer 220, gas generated inside the pouch is easily adsorbed, and also the lead film 190 may be easily fused and/or sealed with the electrode lead and/or the pouch film laminate.

The lead adhesive layer 210 is in direct contact with the electrode lead 180 and may be used to make the lead film 190 adhere to the electrode lead 180.

The lead adhesive layer 210 may include any material that easily adheres to the electrode lead 180. Specifically, the lead adhesive layer 210 may include acid modified polyolefin. For example, the lead adhesive layer 210 may include at least one of acid modified polypropylene (PPa), acid modified polyethylene (PEa), or plasma-treated polypropylene (PP), but is not limited thereto.

The lead adhesive layer 210 may have a thickness of 45 µm to 80 µm, specifically 50 µm to 70 µm, more specifically 55 µm to 65 µm. When the thickness of the lead adhesive layer 210 satisfies the above numerical range, the lead adhesive layer 210 melts within the specified production time (tact time), and accordingly, the lead film 190 and the electrode lead 180 may be easily fused.

The filler layer 220 may be a layer placed at the center of the lead film 190. In general, in the lead film, an intermediate layer placed between the case adhesive layer 230 and the lead adhesive layer 210 includes at least one selected from the group consisting of block polypropylene (Block PP), random polypropylene (random PP), and linear low density polyethylene (LLDPE).

However, according to an embodiment of the present invention, the filler layer 220 disposed in the intermediate layer of the lead film 190 includes polypropylene, which is a homopolymer. In this case, the lead film 190 is prevented from being excessively deformed upon heat sealing. In particular, in the case in which a ceramic filler is included in a layer as in the filler layer 220 according to an embodiment of the present invention, when the polypropylene homopolymer is not used, the melting point (Tm) is relatively low, and accordingly, sealing strength is reduced, and also even when the sealing temperature or pressure is slightly increased upon sealing, the thickness of the filler layer 220 becomes thinner to cause interlayer interface separation of the lead film 190 due to the presence of the ceramic filler.

Accordingly, to prevent the interface separation and maintain excellent sealing strength, the filler layer 220 includes no heat-resistant polymer or block copolymer containing cross-linking molecules.

The filler layer may have a thickness of 45 µm to 80 µm, specifically 50 µm to 70 µm, more specifically 55 µm to 65 µm. When the thickness of the filler layer 220 satisfies the above numerical range, the lead film 190 may be prevented from being excessively deformed due to heat applied upon fusion (adhesion of lead film and electrode lead) or sealing (adhesion of lead film and pouch film laminate), and the shape of the lead film 190 may be maintained.

The case adhesive layer 230 may be a layer in direct contact with the battery case 110, specifically the sealant layer of the pouch film laminate.

The case adhesive layer 230 may include at least one selected from the group consisting of polypropylene, random polypropylene (random PP), and linear low density polyethylene (LLDPE), but is not limited thereto. Preferably, the case adhesive layer 230 sufficiently melts at the sealing temperature when including polypropylene, which is a copolymer, and accordingly, the lead film 190 and the battery case 110 may be easily sealed.

The case adhesive layer 230 may have a thickness of 55 µm to 85 µm, specifically 60 µm to 80 µm, more specifically 65 µm to 75 µm. When the thickness of the case adhesive layer 230 satisfies the above numerical range, the case adhesive layer 230 melts within the specified production time (tact time), and accordingly, the lead film 190 and the battery case 110 may be easily sealed.

### (5) Electrolyte

The pouch type secondary battery 100 according to the present invention may further include an electrolyte (not shown) injected into the pouch type case 110. The electrolyte is used to move lithium ions generated through electrochemical reactions of an electrode upon charging/discharging of the secondary battery 100, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Manufacture of lead assembly

CaCO₃ (average particle diameter D₅₀: 2.8 µm) and a polypropylene homopolymer were mixed and extruded to have a thickness of 62.4 µm to prepare a polypropylene homopolymer film, and a 62.4 µm thick acid modified polypropylene film (lead adhesive layer), the polypropylene homopolymer film (filler layer), and a 72.4 µm thick polypropylene copolymer film (case adhesive layer) were sequentially stacked to prepare a lead film.

In this case, measuring the amount of CaCO₃ was performed through N₂ purging at a heating rate of 10 °C/min in the temperature range of 50 °C to 800 °C using a thermogravimetric analyzer (TGA, METTLER TOLEDO), and the amount was determined to be 10 wt% with respect to a total weight of the lead film.

Then, the lead film was disposed to surround an outer circumferential surface of an electrode lead having a thickness of 40 µm to manufacture a lead assembly.

### (2) Manufacture of pouch type case

A first adhesive film having a width of 266 mm, a length of 50 m, and a thickness of 3 µm, a nylon film having a width of 266 mm, a length of 50 m, and a thickness of 25 µm, and a polyethylene terephthalate (PET) film having a width of 266 mm, a length of 50 m, and a thickness of 12 µm were stacked on one side of an aluminum alloy thin film having a width of 266 mm, a length of 50 m, and a thickness of 60 µm, and a polypropylene film having a width of 266 mm, a length of 50 m, and a thickness of 80 µm was stacked on the other side to prepare a pouch film laminate having a structure of polyethylene terephthalate/nylon/aluminum alloy thin film/polypropylene film.

In this case, the first adhesive film, the nylon film, the second adhesive film, and the polyethylene terephthalate film are base layers, the aluminum alloy thin film is a gas barrier layer, and the polypropylene film is a sealant layer.

The pouch film laminate was molded to manufacture a pouch type case including an accommodation portion and a sealing portion.

### (3) Manufacture of pouch type secondary battery

A negative electrode, a positive electrode, and a porous polyethylene separator were assembled using a stacking method, and then laminated to manufacture an electrode assembly. Thereafter, a lead assembly was coupled to the electrode assembly.

LiPF₆ was dissolved in a solvent (EC:EMC:DMC = volume ratio of 3:3:4 ) to 1.0 M to prepare an electrolyte. The electrode assembly was accommodated in the pouch type case with a front end of the lead assembly protruding to the outside, and the electrolyte was injected.

Thereafter, the sealing portion of the pouch type case was sealed for 2 seconds in the conditions of a seal bar area of 200 mm × 5mm, 220 °C, and 0.1 MPa to manufacture a pouch type secondary battery. In this case, in the sealing portion, the portion where the lead assembly is formed has a structure in which lower case/lead film/electrode lead/lead film/upper case are sequentially stacked.

### Example 2

A lead assembly was manufactured in the same manner as in Example 1, except that CaCO₃ was included in an amount of 7 wt% with respect to a total weight of the lead film.

A pouch type case and a secondary battery were manufactured in the same manner as in Example 1, except that the above lead assembly was used.

### Example 3

A lead assembly was manufactured in the same manner as in Example 1, except that CaCO₃ was included in an amount of 3 wt% with respect to a total weight of the lead film.

A pouch type case and a secondary battery were manufactured in the same manner as in Example 1, except that the above lead assembly was used.

### Example 4

A lead assembly was manufactured in the same manner as in Example 1, except that CaCO₃ was included in an amount of 5 wt% with respect to a total weight of the lead film.

A pouch type case and a secondary battery were manufactured in the same manner as in Example 1, except that the above lead assembly was used.

### Comparative Example 1

A lead assembly was manufactured in the same manner as in Example 1, except that the lead film included no CaCO₃.

A pouch type case and a secondary battery were manufactured in the same manner as in Example 1, except that the above lead assembly was used.

### Comparative Example 2

A lead assembly was manufactured in the same manner as in Example 1, except that CaCO₃ was included in an amount of 20 wt% with respect to a total weight of the lead film.

A pouch type case and a secondary battery were manufactured in the same manner as in Example 1, except that the above lead assembly was used.

### Comparative Example 3

A lead assembly was manufactured in the same manner as in Example 1, except that CaCO₃ having an average particle diameter D₅₀ of 0.1 µm was included in an amount of 15 wt% with respect to a total weight of the lead film.

A pouch type case and a secondary battery were manufactured in the same manner as in Example 1, except that the above lead assembly was used.

### Comparative Example 4

A lead assembly was manufactured in the same manner as in Example 1, except that CaCO₃ having an average particle diameter D₅₀ of 22 µm was included in an amount of 15 wt% with respect to a total weight of the lead film.

A pouch type case and a secondary battery were manufactured in the same manner as in Example 1, except that the above lead assembly was used.

### Comparative Example 5

A lead assembly was manufactured in the same manner as in Example 1, except that block-polypropylene (block-PP) was applied as a filler layer instead of a polypropylene homopolymer film, and CaCO₃ was included in an amount of 15 wt% with respect to a total weight of the lead film.

A pouch type case and a secondary battery were manufactured in the same manner as in Example 1, except that the above lead assembly was used.

### Comparative Example 6

A lead assembly was manufactured in the same manner as in Example 1, except that block-polypropylene (block-PP) was applied as a filler layer instead of a polypropylene homopolymer film, and CaCO₃ was included in an amount of 7 wt% with respect to a total weight of the lead film.

A pouch type case and a secondary battery were manufactured in the same manner as in Example 1, except that the above lead assembly was used.

### Experimental Example 1: Evaluation of extrusion processability of polypropylene homopolymer film

Extrusion processability of polypropylene homopolymer films prepared in Examples 1 to 4 and Comparative Examples 1 to 6 was evaluated. Specifically, when a polypropylene homopolymer resin containing CaCO₃ was extruded, the appearance of the extruded film was visually observed, and the extrusion processability thereof is shown in Table 1 below.

### Experimental Example 2: Evaluation of adhesive strength between electrode lead and lead film

Electrolyte solution resistance adhesive strength of the lead assemblies manufactured in Examples 1 to 4 and Comparative Examples 1 to 6 was measured. Specifically, the lead assemblies were immersed in an electrolyte solution (EC:EMC:DMC = volume ratio of 3:3:4, LiPF₆ 1.0 M) and stored in a chamber at 60 °C and 90% humidity for 2 weeks. The lead assemblies were taken out from the electrolyte solution, washed of the remaining electrolyte solution, and left in the air. For before and after immersing the above-described lead assemblies in the electrolyte solution, a portion 10 mm spaced apart from one edge of the lead assemblies was bent to break an electrode lead, and then both ends of the lead assemblies were connected to each of a lower jig and an upper jig of UTM, and then pulled 30 mm in a 180° direction at a speed of 50 mm/min to calculate an average value (N/10 mm) of a flat section of the measured adhesive strength graph. Sealing strength between the electrode lead and the lead film after electrolyte immersion, and reduction (%) in sealing strength after electrolyte solution immersion compared to before electrolyte solution immersion were measure through the method described above and are shown in Table 1 below.

### Experimental Example 3: Evaluation of sealing strength and interlayer separation of pouch type secondary battery

Sealing strength of the pouch type secondary batteries manufactured in Examples 1 to 4 and Comparative Examples 1 to 6 were measured, and the presence of interlayer separation in a sealing portion of the pouch type secondary batteries was observed.

Specifically, in the pouch type secondary batteries, a sealing portion where a lead assembly and a pouch film laminate were sealed was cut at 15 mm intervals, and then an electrode lead was connected to a lower jig of UTM and the pouch film laminate was connected to an upper jig, and then the resulting product was pulled 30 mm in a 180° direction at a speed of 5 mm/min at room temperature 25 °C to calculate the sealing strength from an average value of a flat section of the measured adhesive strength graph. In addition, when the sealing portion was opened, the cross-section of the sealing portion was observed to determine the presence of separation between layers in the lead film. The results are shown in Table 1 below.

O: Separated interface between lead adhesive layer and case adhesive layer

X: No separated interface between lead adhesive layer and case adhesive layer

**[Table 1]**

| | Ceramic filler | | Filler layer | Extru sion proce ssabi lity | Adhesi ve streng th of lead assemb ly after electr olyte immers ion (N/10m m) | Decrease in adhesive strength of lead assembly before and after electrol yte immersio n (%) | Seal ing stre ngth (kgf /15m m) | Separ ation /No separ ation betwe en layer s |
|---|---|---|---|---|---|---|---|---|
| | D₅₀ (µm) | Amou nt (wt% ) | | | | | | |
| Example 1 | 2.8 | 10 | Homo-PP | Pass | 35 | 10 | 17 | X |
| Example 2 | 2.8 | 7 | Homo-PP | Pass | 31 | 21 | 18 | X |
| Example 3 | 2.8 | 3 | Homo-PP | Pass | 30 | 19 | 18 | X |
| Example 4 | 2.8 | 5 | Homo-PP | Pass | 31 | 18 | 17 | X |
| Comparative Example 1 | 2.8 | 0 | Homo-PP | Pass | 23 | 54 | 20 | X |
| Comparative Example 2 | 2.8 | 20 | Homo-PP | Pass | 28 | 20 | 10 | X |
| Comparative Example 3 | 0.1 | 15 | Homo-PP | Poor | 22 | 37 | 13 | O |
| Comparative Example 4 | 22 | 15 | Homo-PP | Pass | 32 | 14 | 11 | O |
| Comparative Example 5 | 2.8 | 15 | Block-PP | Pass | 30 | 20 | 9 | O |
| Comparative Example 6 | 2.8 | 7 | Block-PP | Pass | 29 | 17 | 11 | O |

According to Table 1, as for Examples 1 to 4, in which the ceramic filler was in an amount of 1 to 14 wt% with respect to a total weight of the lead film and also a filler layer containing the ceramic filler was applied as a polypropylene homopolymer, it is seen that extrusion processability of a polypropylene homopolymer film was satisfactory, and the properties of a lead assembly, such as adhesive strength, reduction in adhesive strength, and sealing strength, were all excellent after electrolyte deposition. However, as for Comparative Example 1, the ceramic filler was not included, and accordingly, it is seen that the adhesive strength of a lead assembly after electrolyte deposition was low, and reduction in adhesive strength was significant, resulting in poor durability, as for Comparative Example 2, it is seen that sealing strength was low due to the high amount of ceramic filler, and as for Comparative Examples 3 and 4, it is seen that sealing strength was low due to the high amount of ceramic filler and separation between layers was caused.

In addition, as for Comparative Examples 5 and 6, block polypropylene was applied as a filler layer, and it is seen that sealing strength was very low and even separation between layers was caused, and when comparing these two Comparative Examples with Example 1 and Comparative Example 2, it is seen that when block polypropylene was applied, the effect was poor regardless of whether the amount of ceramic filler was within the range of 1 wt% to 14 wt%, but when the polypropylene homopolymer was applied, it is seen that there was a significant difference in the adhesive strength and sealing strength of the lead assembly after electrolyte deposition, depending on whether the above range was satisfied. Accordingly, it may be inferred that the amount of ceramic filler and the type of filler layer containing the ceramic filler create a mutual synergy effect.

### Description of Symbols

100: Pouch type secondary battery
110: Pouch type case
120: First case
122: Cup portion
124: Accommodation portion
130: Second case
132: Cup portion
140: Bridge portion
150: Sealing portion
160: Electrode assembly
170: Electrode tab
172: Positive electrode tab
174: Negative electrode tab
180: Electrode lead
182: Positive electrode lead
184: Negative electrode lead
190: Lead film
210: Lead adhesive layer
220: Base layer
230: Case adhesive layer
240: Ceramic filler

## Claims

1. A pouch type secondary battery comprising:
an electrode assembly;
a pouch type case comprising an accommodation portion for accommodating the electrode assembly and a sealing portion for sealing the accommodating portion;
an electrode lead connected to the electrode assembly and protruding to the outside of the pouch type case via the sealing portion; and
a lead film disposed between the electrode lead and the pouch type case,
wherein the lead film has a multilayer structure and comprises a filler layer including a polypropylene homopolymer and a ceramic filler, and the ceramic filler is contained in an amount of 1 wt% to 14 wt% with respect to a total weight of the lead film.

2. The pouch type secondary battery of claim 1, wherein the ceramic filler comprises at least one selected from the group consisting of CaCO₃, Ca(OH)₂, CaCl₂, CaO, KOH, NaOH, and Na₂CO₃.

3. The pouch type secondary battery of claim 1, wherein the lead film comprises a lead adhesive layer disposed on the electrode lead, a base layer disposed on the lead adhesive layer, and a case adhesive layer disposed on the base layer.

4. The pouch type secondary battery of claim 3, wherein the lead adhesive layer comprises acid modified polyolefin.

5. The pouch type secondary battery of claim 3, wherein the lead adhesive layer has a thickness of 45 µm to 80 µm.

6. The pouch type secondary battery of claim 1, wherein the ceramic filler is contained in an amount of 3 wt% to 10 wt% with respect to a total weight of the lead film.

7. The pouch type secondary battery of claim 1, wherein the base layer has a thickness of 45 µm to 80 µm.

8. The pouch type secondary battery of claim 3, wherein the case adhesive layer comprises polypropylene, and
the polypropylene is a copolymer.

9. The pouch type secondary battery of claim 3, wherein the case adhesive layer has a thickness of 55 µm to 85 µm.

10. The pouch type secondary battery of claim 1, wherein the lead film has a thickness of 150 µm to 250 µm.

11. The pouch type secondary battery of claim 1, wherein one side of the electrode lead, which is in direct contact with the lead film, is coated with at least one selected from the group consisting of chromium (Cr), nickel (Ni), aluminum oxide (Al₂O₃), zirconium (Zr), and titanium (Ti).

12. The pouch type secondary battery of claim 1, wherein the ceramic filler has an average particle diameter D₅₀ of 1 µm to 20 µm.
